# EUROPEAN PATENT SPECIFICATION

(11) **EP 0 495 645 B1**
(45) Date of publication and mention of the grant of the patent: **12.11.1997**
(21) Application number: 92300343.8
(22) Date of filing: 15.01.1992
(51) Int. Cl.: G06F 1/00

(54) **Data security device**
Datensicherheitsvorrichtung
Dispositif de protection de données

(30) Priority: 18.01.1991 GB 9101207
(43) Date of publication of application: 22.07.1992
(73) Proprietor: NCR International, Inc., Dayton, Ohio 45479 (US)
(72) Inventor: Kleijne, Theodoor Adriaan, NL-3956 VL Leersum (NL); Goossens, Jan Bart, NL-3732 BL De Bilt (NL)
(74) Representative: Irish, Vivien Elizabeth

(56) References cited:
- GB-A- 2 182 467
- US-A- 4 807 284

## Description

This invention relates to data security devices for storing sensitive data.

U.S. Patent No. 4,807,284, issued February 21, 1989 and assigned to the assignee of the present application, discloses a security device containing a memory which stores sensitive data. The device has a housing formed by six plates each carrying a conductive path segment formed by thick film deposition techniques and each having a meandering configuration covering substantially the entire inner surface of the plate. The four side plates are glued together and attached by an adhesive to a printed circuit board (PCB) which is mounted on the base plate. The top plate is glued to the four side plates. The conductive path segments on the side and base plates are interconnected to form a wire mesh by conductive tracks on the PCB. The conductive path segment on the top plate is connected by conductive wires, which extend through plated through holes in the PCB. Interruption of the wire mesh brought about by an attempt to break into the housing causes a reset signal generator to erase the contents of the memory.

Although the known security device provides a high degree of security, there remains a risk of unauthorized housing penetration via the edge of the printed circuit board. Also, it may be possible for an unauthorized person to gain access to the interior of the security device by removing the adhesive or glue which secures one of the side plates and thereafter pivoting that side plate so as to provide an aperture sufficient to insert an electrical probing conductor into the device and make contact with the electronic circuitry therein, without damaging the conductive property of the conductive epoxy utilized in the wire mesh.

It is an object of the present invention to provide a security housing having increased security against unauthorized access as compared with the known device, while being simple to manufacture and hence low in cost.

Therefore, according to the present invention, there is provided a security device for protecting stored sensitive data, including a closed housing containing memory means adapted to store sensitive data and including a top plate, a base plate and a plurality of side plates having meandering conductive path segments provided on side faces thereof, and interconnection means arranged to electrically interconnect said conductive path segments to form conductive path means, the interruption of which brought about by an attempt to penetrate said housing causes the erasure of the contents of said memory means, characterized in that said side plates are disposed such that each of said side plates has an end face thereof abutting a side face of another side plate, whereby pivoting movement of any of said side plates resulting from an attempt to penetrate said housing is prevented, or results in a disruption of said interconnection means.

One embodiment of the present invention will now be described by way of example, with reference to the accompanying drawings, in which:
Fig. 1 is a perspective view of a security device constructed according to the invention;
Fig. 2 is an exploded perspective view of the security device shown in Fig. 1;
Fig. 3 is top view of the security device shown in Fig. 1 with the top plate removed;
Fig. 4 is a side view of the security device shown in Fig 1;
Fig. 5 is a cross-sectional view of the security device shown in Fig. 1;
Figs. 6 - 9 are further side views of the security device shown in Fig. 1;
Figs. 10 - 14 illustrate the disposition of conductive path segments on the side plates of the security device shown in Fig. 1;
Figs. 15A and 15B are views illustrating the insulator and conductive layers located on the inner surface of the top plate of the security device shown in Fig. 1;
Figs. 16A to 16D inclusive are views illustrating insulator and conductive layers located on the inner surface of the base plate of the security device shown in Fig. 1;
Fig. 17 is a partial sectional view of the security device showing the manner in which electrical interconnections are made between one of the side plates and a printed circuit board included in the security device shown in Fig. 1;
Fig. 18 is a schematic view of portions of the security device showing the locations of conductive interconnection islands on the plates forming the security device and on the printed circuit board;
Fig. 19 is a diagram of the interconnection block utilized in the security device shown in Fig. 1;
Fig. 20 is a schematic diagram showing the manner in which electrical interconnections are made between the six plates and the printed circuit board;
Fig. 21 is a block diagram illustrating the electrical circuitry within the security device; and
Fig. 22 is a circuit diagram of the tamper detection circuitry shown in Fig. 21.

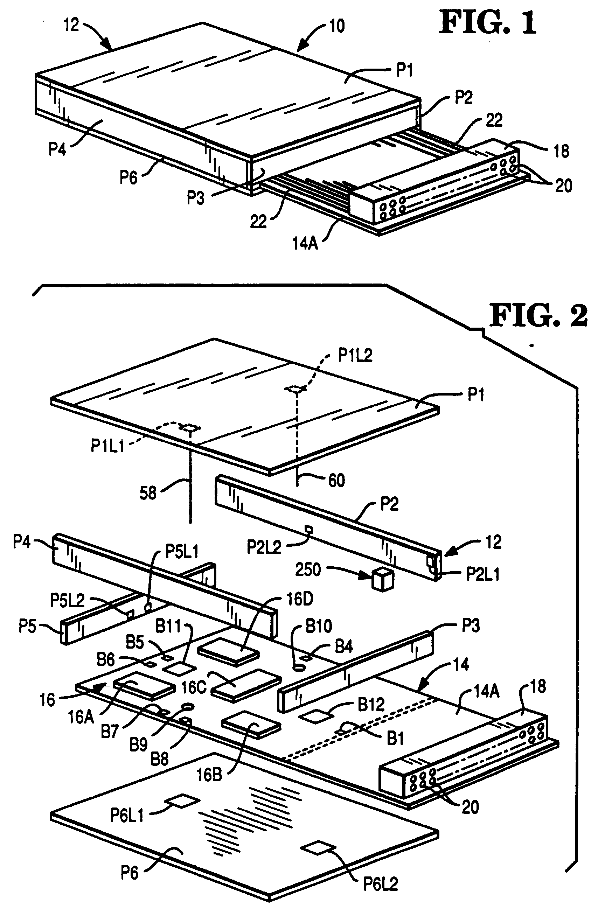

Referring first to Figs. 1 and 2 of the drawings, a security device 10 constructed according to the invention includes a housing 12 which is formed by a top plate P1, side plates P2-5 inclusive and a base plate P6. The six plates P1-P6 inclusive are preferably formed by a ceramic material, since ceramic material is highly resistant to chemical attack. A printed circuit board 14 has mounted thereon in a conventional manner electronic circuitry 16 including individual electronic circuit components such as a 16A, 16B, 16C, 16D, shown schematically in Fig. 2. The components 16A-16D inclusive are interconnected by conductive leads (not shown) which may be provided on both sides of the printed circuit board 14 in a well-known manner.

A portion 14A of the printed circuit board 14 extends beyond the housing 12 and has mounted thereon a connector 18 having a plurality of sockets 20 for connection to external circuitry (not shown) in an apparatus with which the security device 10 is being used. The sockets 20 electronically connected with the circuit components 16A-16D inclusive by conductive leads 22 (Fig. 1) provided on the printed circuit board extension 14A. The printed circuit board 14 is mounted on the base plate P6. The side plates P2, P4 and P5 are mounted on the base plate P6 and attached thereto by a suitable adhesive. The side plate P3, however, which has a smaller height than the other three side plates P2, P4 and P5, is mounted by means of a adhesive on the printed circuit board 14, which extends outwardly from the housing 12 through an aperture between the upper surface of the base plate P6 and the lower edge of the side plate P3.

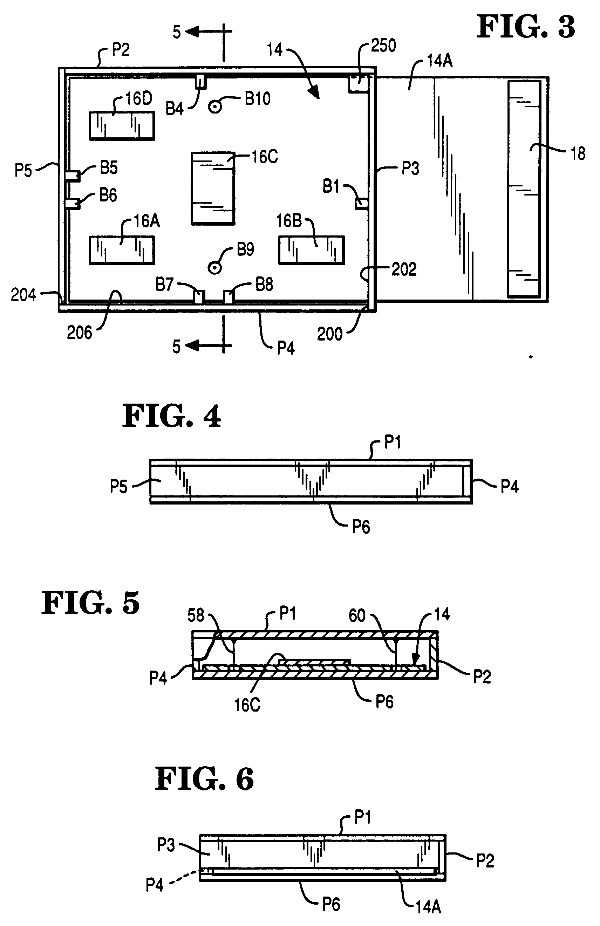

Referring now to Fig. 3 it will be noted that the four side plates P2, P3, P4 and P5 are arranged such that each side plate has an end face thereof abutting an inner surface of an adjacent side plate. For example, the end face 200 of the side plate P4 abuts the inner surface 202 of the adjacent side plate P3, whereas at the other end of the side plate P4, the inner surface 206 therefore abuts an end face of the side plate P5. This end-to-side construction is repeated for each of the side plates so as to form a closed square as in evident from Fig. 3, the attachments at the abutting surfaces being effected by an adhesive.

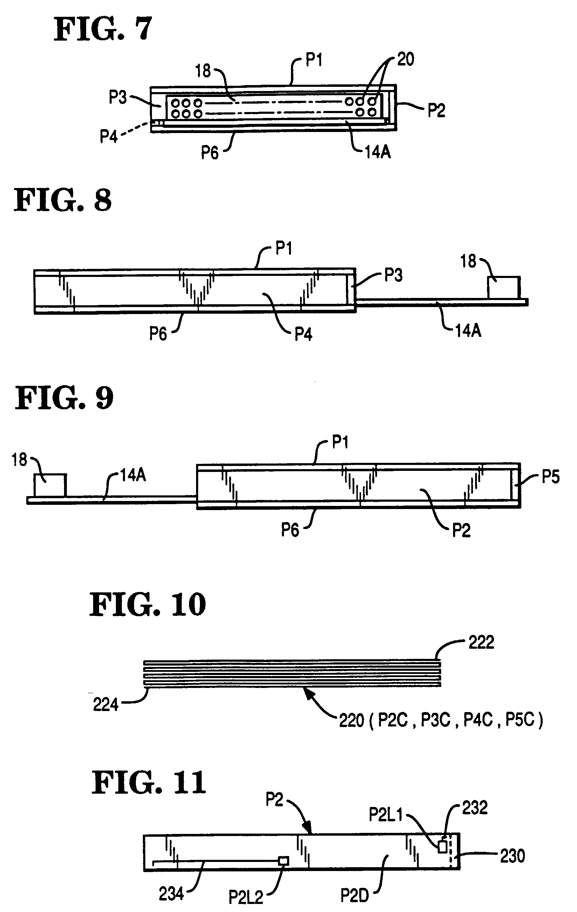

The above-described construction is illustrated in Figs. 4 through 9 inclusive, wherein Fig. 4 is a side view showing the outer face of the side plate P5, Fig. 5 is a cross-sectional view, Fig. 6 is a side view showing the outer face of the side plate P3, with a cross-sectional view of the PCB extension 14A, Fig. 7 is a side view showing the outer face of the side plate P3 and the connector 18, Fig. 8 is a side view showing the side plate P4 and Fig. 9 is a side view showing the side plate P2. The aforementioned end-to-side arrangement of the side plates P2-P5 is clearly seen in Figs. 4 through 9.

The inner surfaces of the six plates P1-P6 inclusive are provided with respective meandering conductive path segments (not shown in Figs. 1 and 2). The disposition and interconnection of the conductive path segments on the respective plates P1-P6 inclusive will be described in more detail hereinafter. As part of the means for interconnecting and conductive path segments, there are provided conductive wires 58, 60 which extend from the top plate P1 through plated holes B9, B10, in the printed circuit board 14. It should be understood that the holes B9, B10 are such that a conductive coating (plating) is provided on the surface of the printed circuit board 14 extending through the holes in a known manner. The conductive wires 58, 60 may be of tin plated copper material having a diameter of about 0.3 mm and the plated holes B9, B10 may have a diameter of about 0.5 mm, enabling the wires 58, 60 to be readily passed through the holes B9, B10 during assembly of the security device 10.

Referring now to Figs. 10 through 14 inclusive, the construction of the conductive path segments on the side plates P2-P5 will be described. Referring first to Fig. 10, it should be understood that each side plate P2-P5 has a meandering conductive path segment 220 provided over substantially the whole surface thereof, wherein parallel interconnected conductive strips extend between terminations 222 and 224 at the lower left-hand and upper right-hand corners, respectively. The segment 220 is embodied as conductive path segment P2C, P3C, P4C and P5C on the respective side plates P2, P3, P4 and P5.

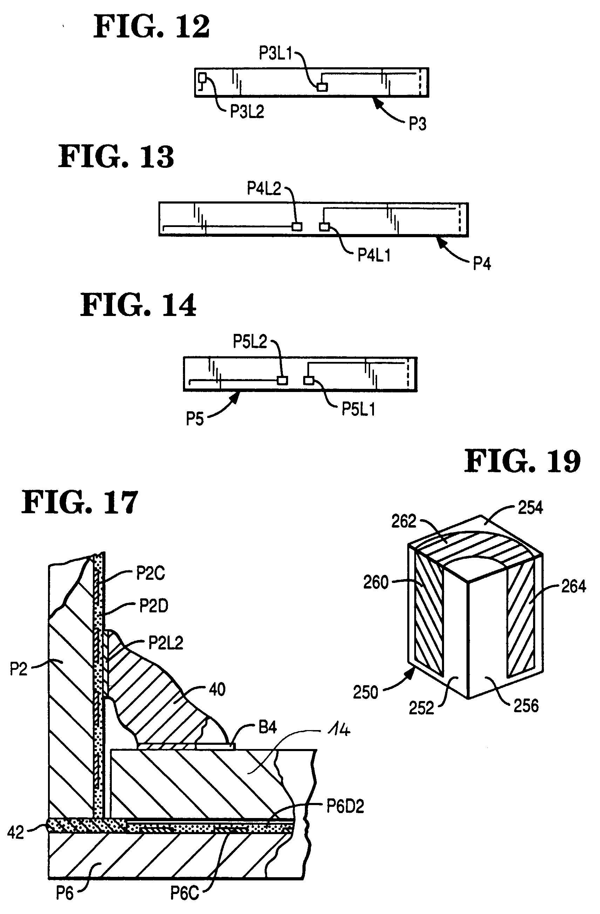

Referring to Fig. 11, there is shown a view of the inner surface of the side plate P2, whereon a dielectric layer P2D overlies the conductive path segment P2C (not shown in Fig. 11) which extends over the entire surface of the plate P2 except for a narrow end region 230 which receives the end surface of the plate P4. A conductive island P2L1 provided on the dielectric layer P2D is connected by a conductive line 232 also provided on the dielectric layer P2D to connect through an opening in the dielectric layer P2D with the end 222 of the underlying conductive path segment P2C. Similarly, a conductive island P2L2 on the dielectric layer P2D connects via a conductive line 234 on the dielectric layer with the end 224 of the underlying conductive path segment P2C. In an analogous manner, the conductive islands P3L1 and P3L2, Fig. 12, on the plate P3 interconnect with the underlying conductive path segment P3C, the conductive islands P4L1, and P4L2, Fig. 13 on the plate P4 interconnect with the underlying conductive path segment P4C on the plate P4, and the conductive islands P5L1 and P5L2 interconnect with the underlying conductive path segment P5C on the plate P5.

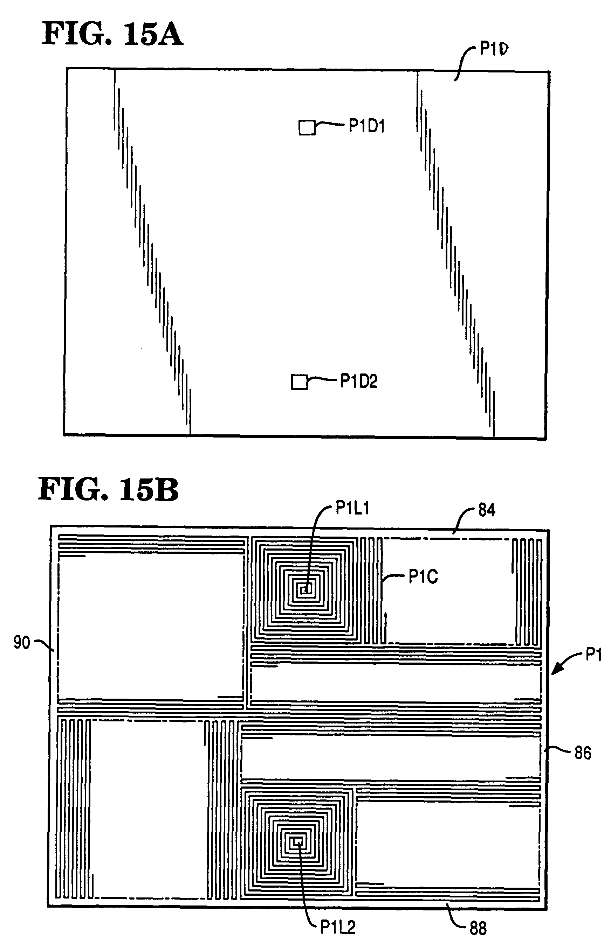

Referring to Figs. 15A and 15B, there is shown in Fig. 15A a dielectric glass layer P1D which overlies a conductive path segment P1C, Fig. 15B, formed on the plate P1. The conductive path segment P1C has a meandering configuration over substantially the entire surface of the plate except for narrow edge regions 84, 86, 88, 90, which receive the edges of the side plates P2-P5 when the housing 12 is assembled. The conductive path segment P1C terminates in conductive islands P1L1 and P1L2. The dielectric glass layer P1D has holes P1D1, P1D2 therein which overlie the conductive islands P1L1, P1L2, such that electrical contact can be made to the islands.

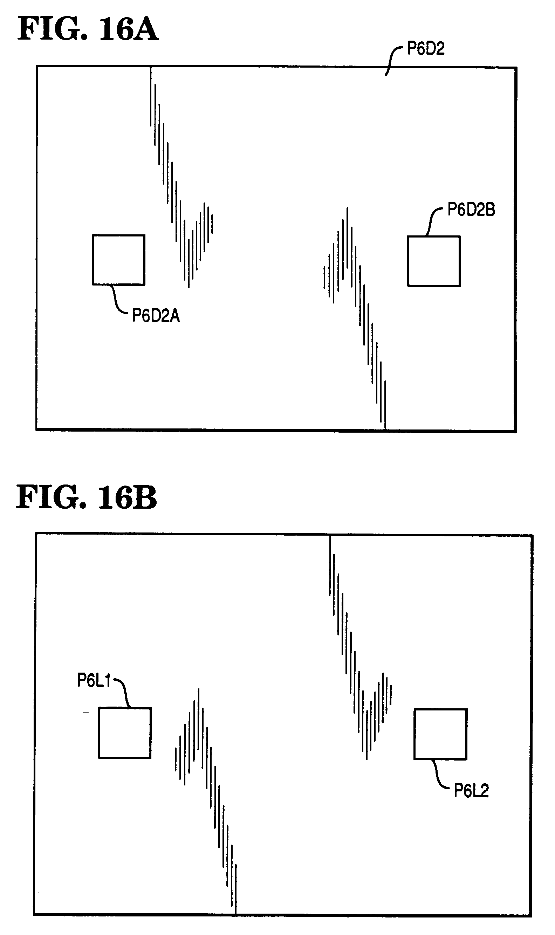

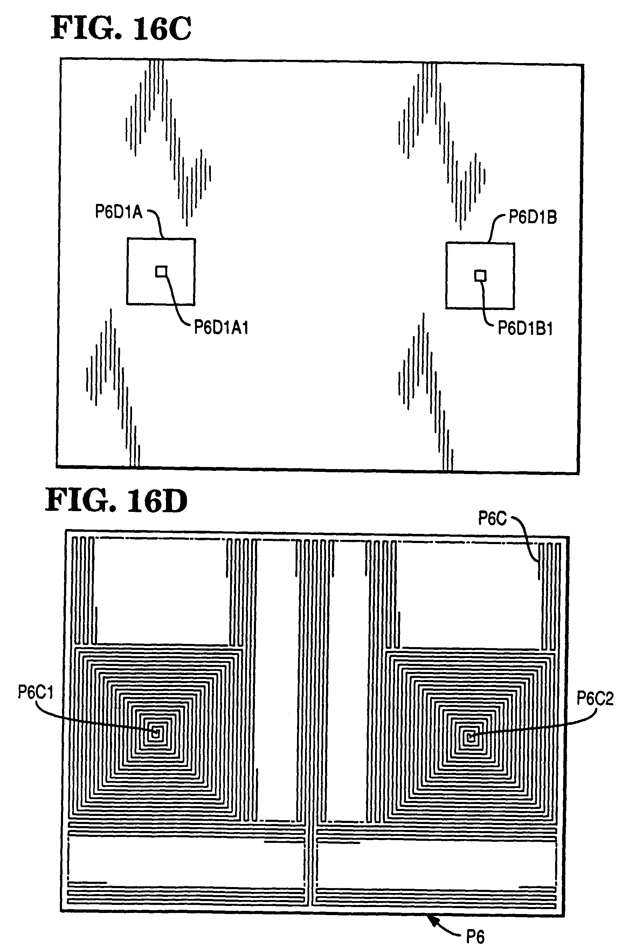

Referring to Figs. 16A to 16D inclusive, there is shown in Fig. 16A a dielectric glass layer P6D2 having holes P6D2A and P6D2B therein. The holes P6D2A, P6D2B overlie conductive islands P6L1 and P6L2 (Fig. 16B). The conductive islands P6L1, P6L2 overlie dielectric regions P6D1A and P6D1B (Fig. 16C). The dielectric regions P6D1A, P6D1B have respective holes P6D1A1, P6D1B1 therein which overlie the ends P6C1, P6C2 of a conductive path segment P6C which has a meandering configuration over substantially the entire surface of the base plate P6 as shown in Fig. 16D. It should be understood that the conductive islands P6L1, P6L2 on the plate P6 are larger in area than the conductive islands on the plates P1-P5 inclusive, and that the described construction permits the meandering conductive path segment P6C on the plate P6 to substantially cover the area of the islands P6L1, P6L2, thereby providing additional security with respect to the relatively large areas of such islands.

It should be understood that the respective conductive and insulator layers, which are superposed on the inner surfaces of the plates P1-P6 inclusive, are formed by conventional thick film deposition techniques. Such techniques are well-known and will not be described in detail herein. Briefly, for each conductive and insulator layer, a different screen is prepared and used to deposit a conductive or insulator paste. After each screening, the layered plate is heated to about 800 degrees Celsius to harden the deposited paste. The thickness of the conductive layer formed in this manner is in the range of about 10-15 microns. Furthermore, the width and spacing of the meandering conductive path segments P1C-P6C inclusive are both about 200 microns.

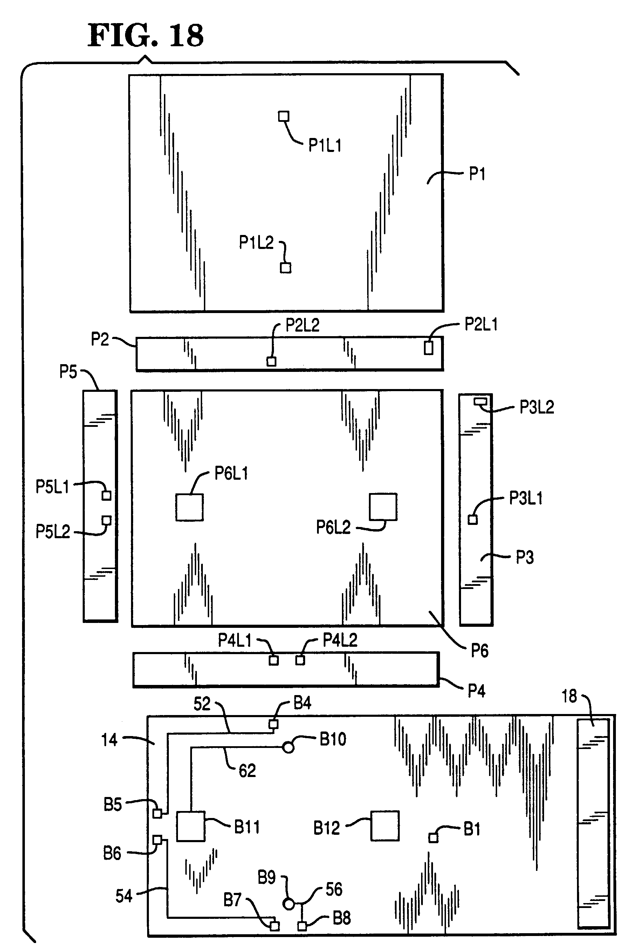

Referring to Figs. 2 and 18, the printed circuit board 14 is provided with conductive islands B1 and B4-B8 inclusive which are connected in the assembled housing 12 with conductive islands on the side plates P2-P5 inclusive. The printed circuit board is also provided with the plated through holes B9, B10, previously described and with conductive regions B11 and B12 which extend through the thickness of the printed circuit board 14.

Referring briefly to Fig. 17, there is shown a partial cross-sectional view through the plates P2 and P6 and the printed circuit board 14 in the assembled security device 10. The conductive island P2L2 (Fig. 11) on the side plate P2 is electrically connected to a conductive island B4 on the printed circuit board 14 by frangible conductive epoxy bonding material 40. The connections between the conductive islands B1, B5, B6, B7 and B8 on the printed circuit board 14 and the associated conductive islands on the side plates P2-P5 inclusive are formed in identical manner using conductive epoxy material 40. The conductive epoxy material 40 has the advantage of being frangible, that is, easily broken in response to attempted mechanical distortions of the material, while compensating for differences in the thermal expansion coefficients of the printed circuit board 14 and the ceramic material of the housing plates. Also shown in Fig. 17 is nonconductive ceramic filled epoxy bonding material 42 which bonds the side plate P2 to the base plate P6.

It will be noted that the conductive path segments P2C and P3C are not connected together via conductive islands on the printed circuit board, but are connected directly together by means of an interconnection between the conductive areas P2L1 and P3L2, which are located above the level of the printed circuit board 14. In the preferred embodiment, such interconnection is made by a 6-sided interconnection block 250 (to be described) for ease of device assembly in manufacture. However, other types of interconnections are possible, for example frangible electrically conductive epoxy material such as the material 40 could be utilized.

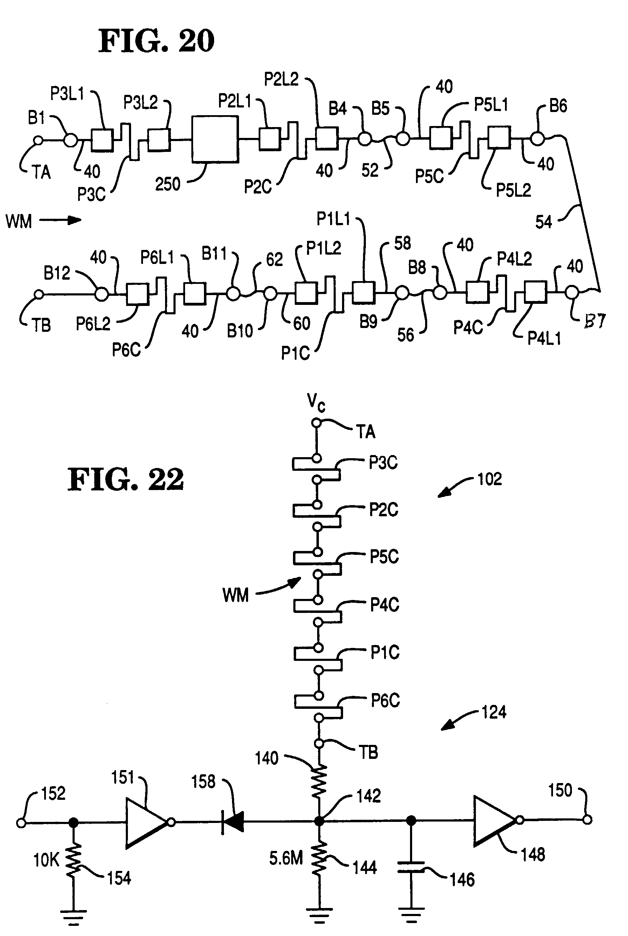

Referring now to Fig. 19, there is shown an interconnection block 250 which, in the preferred embodiment, serves to connect the conductive island P2L1 on the side plate P2 with the conductive island P3L2 on the side plate P3. The interconnection block 250 is a ceramic block having six plane surfaces. On three adjacent surfaces 252, 254 and 256 there are disposed respective conductive areas 260, 262 and 264 formed by conventional thick film deposition techniques such that a conductive path is formed between the conductive areas 260 and 264 via the conductive area 262. The areas 260 and 264 are rectangular shape and the area 262 is part-annular shape. The interconnection block is attached by conductive glue material with the conductive area 260 coupling to the conductive island P3L2 on the side plate P3 and the conductive area 264 coupling to the conductive island P2L1 on the side plate P2.

The interconnection of the conductive path segments P1C-P6C inclusive on the six plates P1-P6 inclusive forms a single conductive path, referred to herein as a wire mesh WM, which will now be described, with particular reference to Figs. 18-20. It should be understood that Fig. 20 is a schematic diagram illustrating the manner in which the conductive path segments P1C-P6C inclusive are interconnected to form the wire mesh WM. Thus, starting from an input terminal TA, the path proceeds to the conductive island B1 on the printed circuit board 14, via conductive material 40 to the conductive island P3L1 on the side plate P3. The path continues through the conductive path segment P3C on the plate P3 to the conductive island P3L2 and hence via the interconnection block 250 to conductive island P2L1 on the side plate P2. It will be appreciated that the path continues through the conductive path segments on the side plates P2, P5 and P4 via the conductive leads 52, 54 on the printed circuit board 14, which interconnect respective conductive island pairs B4, B5, B6, B7 on the printed circuit board 14.

Proceeding from conductive path segment P4C on the side plate P4, the path continues via conductive island B8 and conductive lead 56 on the printed circuit board 14. The plated through hole B9 connects to the electrically conductive wire 58 (Fig. 2) which extends vertically to contact the island P1L1 on the top plate P1. The path continues through the conductive path segment P1C on the top plate P1 to the island P1L2 and hence via the vertically extending electrically conductive wire 60, Fig. 2 to the plated through hole B10 in the printed circuit board 14. The path continues through a conductive lead 62 on the printed circuit board 14 to the electrically conductive region B11 which extends through the printed circuit board 14 to the lower surface thereof. The conductive region B11 connects via conductive material 40 with the conductive island P6L1 which connects to conductive path segment P6C on the base place P6. The path continues via the conductive island P6L2 to the conductive region B12 on the printed circuit board 14 which connects to an output terminal TB, Fig. 20.

Although the conductive leads 52, 54, 56, 62 on printed circuit board 14 are shown as being provided on the upper surface thereof, it will be appreciated that portions of such conductive leads could be disposed, via feed-through connections in the board 14, on the lower side of the board 14, to allow for the disposition of the circuit components 16A-16D inclusive (Fig. 2) on the upper surface of the board 14.

The manner in which the security device 10 is assembled will now be described. First, the side plates P2-P5 inclusive (Fig. 2) are attached together, using ceramic filled epoxy material. The assembly consisting of the side plates P2-P5 inclusive is then attached to the printed circuit board 14 using ceramic filled epoxy material 42 at the junction with the side plate P3, and the conductive epoxy material 40 at the junction with the conductive islands such as P2L2 to B4 (Fig. 17). Next, the top plate P1, having the conductive wires 58, 60 attached thereto, is attached to the top edges of the side plates P2-P5 inclusive using ceramic filled epoxy 42 and the wires 58, 60 are passed through the plated holes B9, B10 and the wire ends protruding beyond the soldered connection are cut off. Finally the base plate P6 is provided with conductive epoxy material (not shown) on the conductive islands P6L1, P6L2 and attached to the lower edges of the plates P2, P4 and P5 and to the printed circuit board 14, using ceramic filled epoxy material 42, such that the conductive regions B11, B12 on the printed circuit board 14 are connected to the conductive islands P6L1 and P6L2 respectively. The thus assembled security device 10 is held together with a spring (not shown) while the epoxy bonding material is cured in an over at about 125 degrees Celsius, after which the spring is removed. It will be appreciated that the security device 10 has the advantage that it can be manufactured by a simple and inexpensive procedure. Furthermore, once the device 10 is assembled, any attempt to remove the top plate P1 will result in the interruption of at least one of the conductive wires, 58, 60.

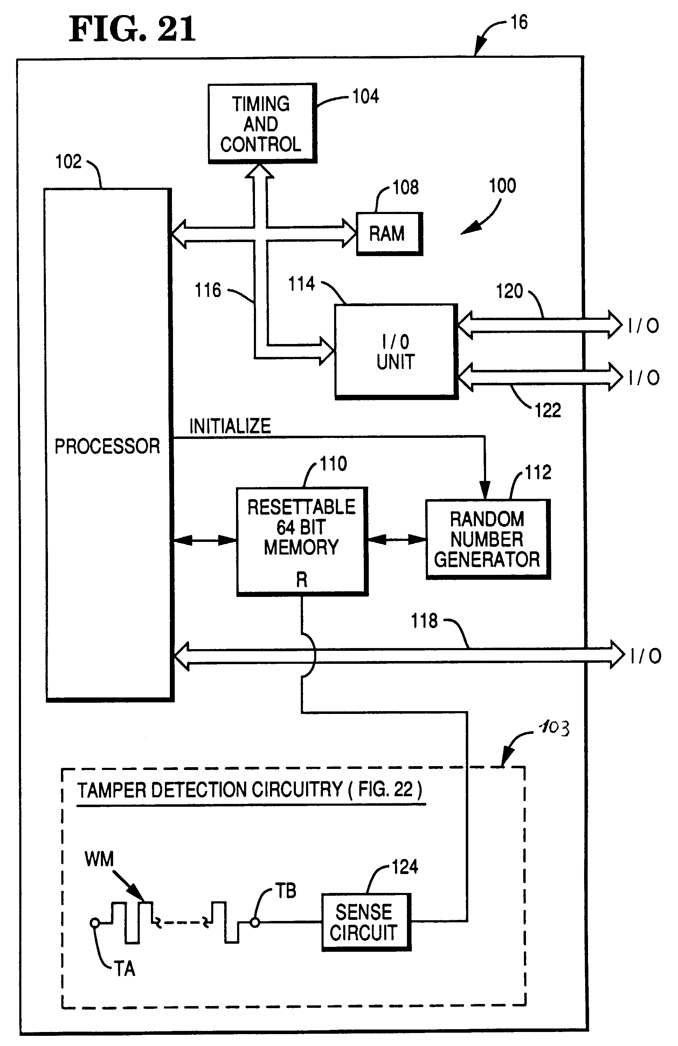

Referring now to Fig. 21, the electronic circuitry 16 of Fig. 2 will now be discussed in more detail. The electronic circuitry 16 includes data processing circuitry 100 and tamper detection circuitry 103.

The data processing circuitry 100 can be utilized to perform any desired data processing operation systems, electronic fund transfers, data encryption/decryption, PIN (personal identification number) verification, data transmission/reception, access control and home banking. The data processing circuitry 100 includes a processor 102 for selectively controlling the operation of the electronic circuitry 16 in response to input data and instructions, a timing and control circuit 104 for controlling the operation of the processor 102, a random access memory (RAM) 108 for storing the software program to be executed by the processor 102 and for providing a temporary memory storage, a volatile memory 110 for storing most sensitive or secure data such as a key storage key (KSK) (to be explained hereinafter), a random number generator 112 and input/output (I/O) unit 114.

A data, control and address bus 116, bidirectional I/O bus 118 and I/O lines 120 and 122 are coupled to the processor 102, timing and control circuit 104, RAM 108 and I/O unit 114 to enable the data processing circuitry 100 to perform its data processing operations. Data may be passed over bidirectional I/O bus 118 to or from the processor 102 and over I/O lines 120 and 122 to or from the I/O unit 114. The remote ends of the I/O bus 118 and I/O lines 120 and 122 may be selectively coupled to, for example, another data processor (not shown), a main computer (not shown) and a peripheral (such as a keyboard) (not shown) via the connector 18 (Fig. 2) in order to enable the data processing circuity 100 to perform its preselected operations.

Power to operate the electronic circuitry 16 is preferably supplied from external power sources (not shown), such as power supplies and batteries, via the connector 18.

An initialization subroutine, contained in the software program stored in the RAM 108, is executed in a special mode of operation controlled by an authorized person. Preferably, this initialization subroutine can only be executed once after the security device 10 has been completely assembled.

For purposes of additional security it is preferable that the volatile memory 110 be, for example, a resettable memory such as a 64-bit shift register memory.

During the execution of an INITIALIZE subroutine the processor 102 applies an INITIALIZE signal to the random number generator 112 to enable the generator 112 to generate a random number which is stored in the memory 110 as an exemplary sequence of 64 random bits. This sequence of 64 random bits is the KSK (key storage key), which is the most sensitive or secure data contained in the data processing circuitry 100. The KSK is utilized to encrypt keys which are to be entered into the security device 10 for storage in the FAM 108. Such keys are then used in data encryption operations. The precise manner in which the KSK is utilized is not of significance to the present invention and will, therefore, not be further described herein. It should, however, be noted that the resettable memory 110 stores the KSK, that the contents of the memory 110 should not be altered (if the security device 10 was programmed to run the initialization program only once), that the KSK is never outputted to the outside world from the security device 10, and that for purposes of security external access to the KSK contents of the memory 110 by various means must be prevented.

Tamper detection circuitry 103 is included in the electronic circuitry 16 to specifically destroy the KSK in the resettable memory 110 if there is any attempt to penetrate the housing 12 of the security device 10 to gain access to the KSK stored in the memory 110. It should be realized that if the KSK is destroyed, any encrypted data or keys stored in RAM 108 become meaningless or useless.

An attempt to penetrate the ceramic housing 12 of the security device 10 may be made by drilling into or cracking the housing 12. To protect against this possibility, the wire mesh WM of Fig. 20 is connected between a reference potential Vc and ground, and to a sense circuit 124. An attempt to drill into or crack the housing 12 that interrupts or damages the wire mesh WM causes the sense circuit 124 to generate a reset signal. An attempt to remove the top plate P1 will result in at least one of the conductive wires 58, 60 being broken, thereby interrupting the wire mesh WM. Similarly, if the wire mesh WM is shorted by such an attempt, the sense circuit 124 will generate a reset signal.

A different type of attempt to penetrate the housing 12 is to remove the adhesive bonding the plates together and to attempt to pivot one of the side plates P2-P5 so as to provide a small aperture sufficient to pass an electrical probe into the interior of the housing 12 and make contact with the electronic circuitry 16 therein. This type of penetration attempt is also prevented. For example, an attempt to pivot the side plate P5 inwards is prevented by the aforementioned end-to-side disposition of the side plates, whereas an attempt to pivot the side plate P5 outwards results in damage to or disruption of the frangible electrically conductive material 40 interconnecting the conductive areas P5L1 and B5 and/or the frangible electrically conductive material 40 interconnecting the conductive areas P5L2 and R6. With regard to the side plate P3, which is mounted on the printed circuit board 14, pivoting inwards is prevented by the end-to-side side plate disposition. Pivoting of the side plate P3 outwards results in electrical disconnection of the interconnection block 250 and hence activation of the tamper detection circuitry 103. In this connection, it will be appreciated that if the electrical connections to the side plate P3 are both located on the printed circuit board 14, then pivoting of the side plate P3 outwards might be possible without disrupting such frangible electrical interconnecting material, since the pivot axis would be in line with the printed circuit board 14.

Referring to Fig. 22, the tamper detection circuitry 103 will now be described. The terminal TB of the wire mesh WM is connected via a 100 kilohm resistor 140 to a junction point 142. The junction point 142 is connected via a 5.6 megohm resistor 144 to ground, to one side of a 22 microfarad capacitor 146, the other side of which is grounded, and to the input of an inverter 148. The output of the inverter 148 is connected to an output terminal 150 which is connected to the RESET input of the resettable memory 110.

Since the terminal TA of the wire mesh WM is connected to a reference voltage supply Vc, the capacitor 146 is normally maintained in a charged condition. An interruption in, or grounding of the wire mesh WM, however, will cause the capacitor 146 to discharge and thereby produce a positive going RESET pulse at the output of the inverter 148, which pulse is supplied via the output terminal 150 to reset the resettable memory 110.

The remaining components shown in Fig. 22 enable the memory 110 to be reset in response to an external reset signal applied, via the connector 18 (Fig. 2) to the terminal 152. The terminal 152 is connected via a 10 kilohm resistor 154 to ground and to the input of an inverter 151, the output of which is connected via an isolating diode 158 to the junction point 142. It will be appreciated that a positive-going input signal on the terminal 152 will produce a positive-going RESET pulse on the output terminal 150 to reset the resettable memory 110.

## Claims

1. A security device for protecting stored sensitive data, including a closed housing (12) containing memory means (110) adapted to store sensitive data and including a top plate (P1), a base plate (P6) and a plurality of side plates (P2-P5) having meandering conductive path segments on side faces thereof, and interconnection means (40,250) arranged to electrically interconnect said conductive path segments to form conductive path means (WM), the interruption of which, brought about by an attempt to penetrate said housing (12) causes the erasure of the contents of said memory means (110), characterized in that said side plates (P2-P5) are disposed such that each of said side plates (P2-P5) has an end face thereof (200) abutting a side face (202) of another side plate, whereby pivoting movement of any of said side plates (P2-P5) resulting from an attempt to penetrate said housing (12) is prevented, or results in a disruption of said interconnection means (40,250).

2. A security device according to claim 1, characterized in that said memory means (110) is mounted on a printed circuit board (14) which is mounted on said base plate (P6), in that first, second and third side plates (P2,P4,P5) are mounted between said top and base plates (P1,P6), and in that a fourth side plate (P3) is mounted between said top plate (P1) and said printed circuit board (14), which extends outwardly from said housing (12) through an aperture between said fourth side plate (P3) and said plate (P6).

3. A security device according to claim 2, characterized in that said interconnection means includes frangible, electrically conductive material (40) interconnecting conductive areas (P5L1, P5L2) on said sides plates (P5) with conductive areas (B5, B6) on said printed circuit board (14).

4. A security device according to claim 3, characterized in that said interconnection means includes a multi-sided block (250) having first, second and third conductive areas (260, 262, 264) disposed on respective first, second and third surfaces thereof to form a continuous conductive path from said first conductive area (260) via said second conductive area (262) to said third conductive area (264), said multi-sided block (250) being positioned to interconnect conductive areas (P2L1, P3L2) on said first and fourth side plate (P2, P3).

5. A security device according to any one of claims 2 to 4, characterized in that said interconnection means includes conductive track means (52,54,56,62) on said printed circuit board (14), and conductive wires (58,60) extending through apertures (B9,B10) in said printed circuit board (14) to directly connect with said conductive track means on said printed circuit board (14).

6. A security device according to any one fo the preceding claims, characterized in that said conductive path segments are formed by a conductive thick film having a thickness in the range of from about 10 microns to about 15 microns.

7. A security device according to any one of the preceding claims, characterized in that said conductive path segments are formed in meandering configurations over substantially the entire inner surface areas of said plates (P1-P6).

8. A security device according to any one of the preceding claims, characterized in that said conductive path means (WM) is connected between voltage supply means (Vc) and a reference potential means, and in that a sensing circuit (124) is adapted to detect the interruption of the current path between said voltage supply means (Vc) and said reference potential means.

9. A security device according to claim 8, characterized in that said sensing circuit (124) includes capacitive means (146) in circuit with said conductive path means (WM), and an inverter (148), responsive to the charge state of said capacitive means (146) to produce a reset signal for erasing said memory means (110) in response to the interruption of said conductive path means (WM).

## Patentansprüche

1. Sicherheitseinrichtung zum Schützen gespeicherter, sensiblen Daten, die ein geschlossenes Gehäuse (12) umfaßt, das eine Speichereinrichtung (110), die zum Speichern sensiblen Daten ausgelegt ist, enthält und eine obere Platte (P1), eine Grundplatte (P6) und eine Vielzahl von Seitenplatten (P2-P5) mit mäandrierenden, leitfähigen Bahnabschnitten auf deren Seitenflächen und eine Verbindungseinrichtung (40, 250) umfaßt, die zum elektrischen Verbinden der leitfähigen Bahnabschnitte zum Ausbilden einer leitfähigen Bahneinrichtung (WM) eingerichtet ist, wobei die Unterbrechung von dieser, die durch einen Versuch, in das Gehäuse (12) einzudringen, hervorgebracht wird, das Löschen der Inhalte der Speichereinrichtung (110) bewirkt,
dadurch gekennzeichnet, daß
die Seitenplatten (P2-P5) so angeordnet sind, daß von jeder der Seitenplatten (P2-P5) eine Stirnfläche von dieser (200) gegen eine Seitenfläche (202) einer anderen Seitenplatte stößt, wodurch eine Verschwenkungsbewegung von irgendeiner der Seitenplatten (P2-P5), die aus einem Versuch, in das Gehäuse (12) einzudringen, folgt, verhindert wird, oder eine Unterbrechung der Verbindungseinrichtung (40, 250) bewirkt.

2. Sicherheitseinrichtung nach Anspruch 1, dadurch gekennzeichnet, daß die Speichereinrichtung (110) an einer Leiterplatte (14) befestigt ist, die an der Grundplatte (P6) befestigt ist, daß eine erste, eine zweite und eine dritte Seitenplatte (P2, P4, P5) zwischen der oberen und der Grundplatte (P1, P6) montiert sind, und daß eine vierte Seitenplatte (P3) zwischen der oberen Platte (P1) und der Leiterplatte (14) montiert ist, die sich aus dem Gehäuse (12) durch eine Öffnung zwischen der vierten Seitenplatte (P3) und der Grundplatte (P6) nach außen hin erstreckt.

3. Sicherheitseinrichtung nach Anspruch 2, dadurch gekennzeichnet, daß die Verbindungseinrichtung ein zerbrechliches, elektrisch leitfähiges Material (40) umfaßt, das leitfähige Bereiche (P5L1, P5L2) an den Seitenplatten (P5) mit leitfähigen Bereichen (B5, B6) an der Leiterplatte (14) verbindet.

4. Sicherheitseinrichtung nach Anspruch 3, dadurch gekennzeichnet, daß die Verbindungseinrichtung einen mehrseitiger Block (250) mit einer ersten, einer zweiten und einer dritten leitfähigen Fläche (260, 262, 264) umfaßt, die an dessen entsprechender erster, zweiter und dritter Oberfläche zum Ausbilden einer kontinuierlichen leitfähigen Bahn von dem ersten leitfähigen Bereich (260) über den zweiten leitfähigen Bereich (262) zu dem dritten leitfähigen Bereich (264) ausgebildet sind, wobei der mehrseitige Block (250) angeordnet ist, leitfähige Bereiche (P2L1, P3L2) an der ersten und der vierten Seitenplatte (P2, P3) zu verbinden.

5. Sicherheitseinrichtung nach einem der Ansprüche 2 bis 4, dadurch gekennzeichnet, daß die Verbindungseinrichtung eine leitfähige Bahneinrichtung (52, 54, 56, 62) an der Leiterplatte (14) und leitfähige Drähte (58, 60) umfaßt, die sich durch Öffnungen (B9, B10) in der Leiterplatte (14) zum direkten Verbinden mit den leitfähigen Bahneinrichtungen an der Leiterplatte (14) erstrecken.

6. Sicherheitseinrichtung nach einem der vorhergehenden Ansprüche, dadurch gekennzeichnet, daß die leitfähigen Bahnabschnitte durch eine leitfähige Dickschicht mit einer Dicke im Bereich von etwa 10 µm bis etwa 15 µm ausgebildet sind.

7. Sicherheitseinrichtung nach einem der vorhergehenden Ansprüche, dadurch gekennzeichnet, daß die leitfähigen Bahnabschnitte in mäandrierenden Anordnungen über im wesentlichen die gesamten inneren Oberflächenbereiche der Platten (P1-P6) ausgebildet sind.

8. Sicherheitseinrichtung nach einem der vorhergehenden Ansprüche, dadurch gekennzeichnet, daß die leitfähige Bahneinrichtung (WM) zwischen eine Spannungsversorgung (Vc) und eine Bezugsspannungseinrichtung geschaltet ist, und daß eine Erfassungsschaltung (124) zum Erfassen der Unterbrechung der Strombahn zwischen der Spannungsversorgung (Vc) und der Bezugspotentialeinrichtung ausgelegt ist.

9. Sicherheitseinrichtung nach Anspruch 8, dadurch gekennzeichnet, daß die Erfassungsschaltung (124) eine kapazitive Einrichtung (146) in der Schaltung mit der leitfähigen Bahneinrichtung (WM) und einen Invertierer (148) umfaßt, der auf den Ladungszustand der kapazitiven Einrichtung (146) zum Erzeugen eines Rücksetz-Signals zum Löschen der Speichereinrichtung (110) in Erwiderung auf die Unterbrechung der leitfähigen Bahneinrichtung (WM) anspricht.

## Revendications

1. Un dispositif de sécurité pour protéger les données sensibles mémorisées, comportant un boîtier fermé (12) contenant un moyen mémoire (110) adapté pour mémoriser les données sensibles et comportant une plaque supérieure (P1), une plaque de base (P6) et une pluralité de plaques latérales (P2-P5) ayant des segments voies conductrices sinueux prévus sur les faces latérales de ces dernières, et un moyen d'interconnexion (40, 250) arrangé pour interconnecter électriquement lesdits segments voies conductrices pour former un moyen voie conductrice (WM), dont l'interruption provoquée par une tentative de pénétration dudit boîtier (12) provoque l'effacement du contenu dudit moyen mémoire (110), caractérisé en ce que lesdites plaques latérales (P2-P5) sont disposées de telle façon que chacune desdites plaques latérales (P2-P5) comporte une face d'extrémité (200) butant contre une face latérale (202) d'une autre plaque latérale, par quoi le pivotement de l'une quelconque desdites plaques latérales (P2-P5) découlant d'une tentative de pénétration dudit boîtier (12) est empêché, ou entraîne une perturbation dudit moyen d'interconnexion (40, 250).

2. Un dispositif de sécurité conformément à la revendication 1, caractérisé en ce que ledit moyen mémoire (110) est monté sur une carte à circuits imprimés (14) qui est montée sur ladite plaque de base (P6), en ce que les première, deuxième et troisième plaques latérales (P2, P4, P5) sont montées entre lesdites plaques supérieure et de base (P1, P6), et en ce qu'une quatrième plaque latérale (P3) est montée entre ladite plaque supérieure (P1) et ladite carte à circuits imprimés (14), qui s'étend vers l'extérieur à partir dudit boîtier (12) à travers une ouverture entre ladite quatrième plaque latérale (P3) et ladite plaque de base (P6).

3. Un dispositif de sécurité conformément à la revendication 2, caractérisé en ce que ledit moyen d'interconnexion comporte un matériau électriquement conducteur cassant (40) interconnectant des zones conductrices (P5L1, P5L2) sur lesdites plaques latérales (P5) avec des zones conductrices (B5, B6) sur ladite carte à circuits imprimés (14).

4. Un dispositif de sécurité conformément à la revendication 3, caractérisé en ce que ledit moyen d'interconnexion comporte un bloc à plusieurs côtés (250) ayant des première, deuxième et troisième zones conductrices (260, 262, 264) disposées sur les première, deuxième et troisième surfaces respectives de ce dernier pour former une voie conductrice continue à partir de ladite première zone conductrice (260) par l'intermédiaire de ladite deuxième zone conductrice (262) à ladite troisième zone conductrice (264), ledit bloc à plusieurs côtés (250) étant positionné pour interconnecter les zones conductrices (P2L1, P3L2) sur lesdites première et quatrième plaques latérales (P2, P3).

5. Un dispositif de sécurité conformément à l'une quelconque des revendications 2 à 4, caractérisé en ce que ledit moyen d'interconnexion comporte des moyens pistes conductrices (52, 54, 56, 62) sur ladite carte à circuits imprimés (14), et des fils conducteurs (58, 60) s'étendant à travers des ouvertures (B9, B10) dans ladite carte à circuits imprimés (14) pour se connecter directement avec lesdits moyens pistes conductrices sur ladite carte à circuits imprimés (14).

6. Un dispositif de sécurité conformément à l'une quelconque des revendications précédentes, caractérisé en ce que lesdits segments voies conductrices sont formés par une couche épaisse conductrice ayant une épaisseur dans la gamme de 10 microns environ à 15 microns environ.

7. Un dispositif de sécurité conformément à l'une quelconque des revendications précédentes, caractérisé en ce que lesdits segments voies conductrices sont formés dans des configurations sinueuses sur substantiellement toutes les surfaces intérieures desdites plaques (P1-P6).

8. Un dispositif de sécurité conformément à l'une quelconque des revendications précédentes, caractérisé en ce que ledit moyen voie conductrice (WM) est connecté entre un moyen d'alimentation (Vc) et un moyen tension de référence, et en ce qu'un circuit de captage (124) est adapté pour détecter l'interruption de la voie de courant entre ledit moyen d'alimentation (Vc) et ledit moyen tension de référence.

9. Un dispositif de sécurité conformément à la revendication 8, caractérisé en ce que ledit circuit de captage (124) comporte un moyen capacitif (146) en circuit avec ledit moyen voie conductrice (WM), et un inverseur (148) répondant à l'état de charge dudit moyen capacitif (146) pour produire un signal de remise à zéro pour effacer ledit moyen mémoire (110) en réponse à l'interruption dudit moyen voie conductrice (WM).
